# FASCICULE DE BREVET EUROPEEN

(11) **EP 3 104 161 B1**
(45) Date de publication et mention de la délivrance du brevet: **22.08.2018**
(21) Numéro de dépôt: 16172104.8
(22) Date de dépôt: 31.05.2016
(51) Int. Cl.: G01N 15/14, G01N 15/02, G01N 15/06, G01N 21/03, G01N 15/00

(54) **DISPOSITIF D'IMAGERIE SANS LENTILLE**
LINSENLOSES BILDGEBENDE VORRICHTUNG
LENSLESS IMAGING DEVICE

(30) Priorité: 12.06.2015 FR 1555353
(43) Date de publication de la demande: 14.12.2016
(73) Titulaire: COMMISSARIAT À L'ÉNERGIE ATOMIQUE ET AUX ÉNERGIES ALTERNATIVES, 75015 Paris (FR)
(72) Inventeur: BORDY, Thomas, 38000 GRENOBLE (FR)
(74) Mandataire: Cabinet Beaumont

(56) Documents cités:
- WO-A1-94/01968
- WO-A1-2014/068003
- DE-A1-102012 222 425
- US-A- 3 671 128
- US-A1- 2003 147 254
- US-A1- 2012 020 114
- ALLIER C P ET AL: "Thin wetting film lensless imaging", OPTICAL DIAGNOSTICS AND SENSING XI: TOWARD POINT-OF-CARE DIAGNOSTICS; AND DESIGN AND PERFORMANCE VALIDATION OF PHANTOMS USED IN CONJUNCTION WITH OPTICAL MEASUREMENT OF TISSUE III, SPIE, 1000 20TH ST. BELLINGHAM WA 98225-6705 USA, vol. 7906, no. 1, 10 février 2011 (2011-02-10), pages 1-8, XP060005788, DOI: 10.1117/12.874876

## Description

### Domaine

La présente demande concerne un dispositif d'imagerie sans lentille, c'est-à-dire un dispositif d'acquisition d'une image d'un échantillon, dans lequel l'image est acquise par un capteur recevant directement un rayonnement transmis par l'échantillon, sans optique de grossissement placée entre le capteur et l'échantillon. Elle concerne en particulier l'observation d'un échantillon, par exemple un échantillon biologique, par imagerie sans lentille, en mettant en oeuvre un algorithme de reconstruction de type holographique. Elle vise un dispositif permettant d'améliorer la qualité de l'observation.

### Exposé de l'art antérieur

L'observation d'échantillons, et en particulier d'échantillons biologiques, par imagerie sans lentille, connaît un développement important depuis ces dix dernières années. Cette technique permet d'observer un échantillon en le disposant entre une source de lumière et un photodétecteur matriciel, sans disposer de lentille de grossissement optique entre l'échantillon et le photodétecteur. Ainsi, le photodétecteur collecte une image de l'onde lumineuse transmise par l'échantillon.

Cette image est formée de figures d'interférences entre l'onde lumineuse émise par la source et transmise par l'échantillon, et des ondes de diffraction, résultant de la diffraction par l'échantillon de l'onde lumineuse émise par la source. Ces figures d'interférences sont parfois dénommées figures de diffraction, ou désignées par le terme anglais « diffraction pattern ».

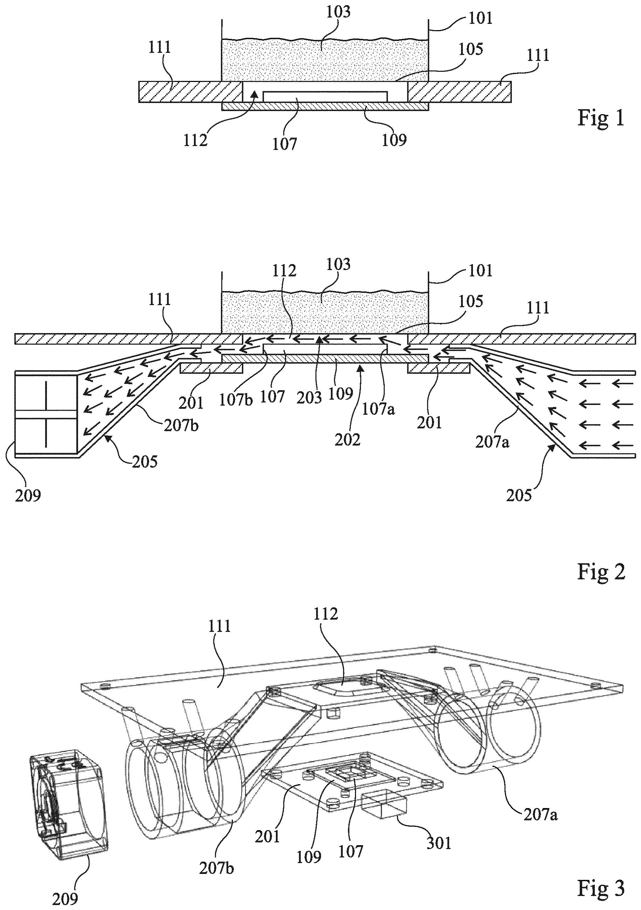

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes. DE102012222425, US3671128, et la publication "thin wetting film lensless imaging" de C.P. Allier et al sont des exemples connus de l'état de la technique. La figure 1 est une vue en coupe illustrant de façon schématique un exemple d'un dispositif d'imagerie sans lentille.

Le dispositif de la figure 1 comprend un support 101 de réception d'un échantillon 103, ce support comportant une face transparente 105, sa face inférieure dans l'exemple représenté. Le dispositif de la figure 1 comprend en outre un capteur d'images 107 disposé en regard de la face transparente 105 du support 101, à faible distance de la face 105, typiquement à une distance comprise entre quelques dizaines de micromètres et quelques centimètres de la face 105. Dans l'exemple représenté, le capteur d'images 107 est monté sur une carte de circuit imprimé 109. La carte de circuit imprimé 109 est elle-même fixée à une face d'un plateau de support 111 muni d'une ouverture 112, de façon que le capteur 107 soit en regard de l'ouverture 112 du plateau 111. Le support 101 de réception de l'échantillon 103 est disposé sur l'autre face du plateau de support 111, de façon que la face transparente 105 du support 101 soit en regard de l'ouverture 112 du plateau 111. Ainsi, la face transparente 105 du support 101, le plateau de support 111 et le capteur 107 sont disposés dans des plans sensiblement parallèles, le plateau de support 111 formant une entretoise définissant la distance entre le capteur 107 et la face 105 du support 101. Comme cela apparaît sur la figure 1, aucun dispositif optique de grossissement n'est placé entre le capteur 107 et le support 101 de réception de l'échantillon 103.

Lors de l'acquisition d'une image, l'échantillon 103 est éclairé par une source lumineuse (non représentée) disposée du côté de l'échantillon opposé au capteur 107 (au-dessus de l'échantillon dans l'exemple de la figure 1). Le capteur 107 mesure le rayonnement transmis par l'échantillon 103 à la longueur d'onde ou aux longueurs d'ondes d'émission de la source lumineuse.

L'échantillon 103 comprend typiquement des objets diffractants micrométriques ou nanométriques baignant dans un milieu liquide transparent ou translucide, par exemple des entités biologiques telles que des bactéries, des virus, des cellules, des globules, des plaquettes, etc.. La source d'éclairement de l'échantillon 103 est typiquement une source de lumière spatialement cohérente, et l'image acquise par le capteur 107 comprend une pluralité de tâches de diffraction formées par les objets diffractants de l'échantillon. Des algorithmes de reconstruction permettent, à partir d'une ou plusieurs images de l'échantillon acquises par le capteur 107, de déterminer certaines caractéristiques de l'échantillon telles que le nombre d'objets diffractants qu'il contient, leurs dimensions, leurs positions, leurs trajectoires, etc.

Un problème qui se pose est que, du fait de la faible distance séparant le capteur d'images 107 de l'échantillon 103, la chaleur dégagée par le capteur 107 est susceptible de modifier la température de l'échantillon 103 pendant l'acquisition, et ainsi de modifier les caractéristiques de l'échantillon, ce qui n'est pas souhaitable. En particulier, pour certains types d'échantillons, notamment des échantillons biologiques, une variation de température, même très faible, peut entrainer des modifications telles que la mise en mouvement, le changement de trajectoire, voire la destruction des entités biologiques de l'échantillon. L'élévation de température peut en outre entrainer l'apparition de turbidités à l'intérieur de l'échantillon, et/ou l'apparition de buée sur le support 101, ce qui peut rendre les images acquises inexploitables.

Il serait souhaitable de pouvoir disposer d'un dispositif d'imagerie sans lentille permettant de résoudre tout ou partie de cet inconvénient.

### Résumé

Ainsi, un mode de réalisation prévoit un dispositif d'acquisition d'une image d'un échantillon tel que défini dans la revendication 1. Selon un mode de réalisation, le système de ventilation comprend au moins une première buse d'injection ou d'extraction d'air disposée du côté d'un premier bord du capteur.

Selon un mode de réalisation, le système de ventilation comprend un ventilateur couplé à la première buse et adapté à souffler ou aspirer de l'air dans la lame d'air par l'intermédiaire de la première buse.

Selon un mode de réalisation, le ventilateur est configuré pour aspirer de l'air de la lame d'air par l'intermédiaire de la première buse.

Selon un mode de réalisation, le système de ventilation comprend en outre une deuxième buse d'injection ou d'extraction d'air disposée du côté d'un deuxième bord du capteur opposé au premier bord.

Selon un mode de réalisation, le dispositif comprend en outre un filtre infrarouge entre le capteur et la face transparente.

Selon un mode de réalisation, le dispositif, comprend en outre un système de ventilation secondaire disposé du côté du capteur opposé à la lame d'air.

Selon un mode de réalisation, la distance entre le capteur et la face transparente est comprise entre 100 µm et 1 cm.

Selon un mode de réalisation, le capteur est un capteur matriciel réalisé en technologie CMOS ou CCD.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe illustrant de façon schématique un exemple d'un dispositif d'imagerie sans lentille ;
la figure 2 est une vue en coupe illustrant de façon schématique un exemple d'un mode de réalisation d'un dispositif d'imagerie sans lentille ; et
la figure 3 est une vue en perspective partielle éclatée illustrant plus en détail un exemple de réalisation du dispositif de la figure 2.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, n'ont pas été décrits les détails de réalisation du capteur d'images et de la source lumineuse d'éclairement des dispositifs d'imagerie sans lentilles, ainsi que les méthodes de traitement permettant de remonter aux caractéristiques des échantillons à partir des images acquises par le capteur. En effet, les modes de réalisation décrits sont compatibles avec les capteurs d'images, sources lumineuses et méthodes de traitement des images habituellement utilisés dans le domaine de l'imagerie sans lentille. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures, étant entendu que, dans la pratique, les dispositifs d'imagerie sans lentille décrits peuvent être orientés différemment. Sauf précision contraire, les expressions "approximativement", "sensiblement", et "de l'ordre de" signifient à 20 % près, de préférence à 10 % près, ou, lorsqu'elles se rapportent à des valeurs angulaires ou à des orientations, à 10° près, de préférence à 5° près.

Pour limiter le transfert de calories du capteur d'images 107 vers l'échantillon 103 dans un dispositif d'imagerie du type décrit en relation avec la figure 1, plusieurs solutions peuvent être envisagées.

Par exemple, un système d'évacuation de la chaleur comportant un radiateur et un ventilateur peut être placé du côté de la face inférieure de la carte de circuit imprimé 109, sous le capteur d'images 107. Toutefois, les cartes de circuit imprimé sont généralement réalisées en des matériaux à faible conductivité thermique. Ainsi, même avec un tel système, une quantité significative de calories produites par le capteur 107 est transmise à l'échantillon 103.

Une autre solution peut être de placer un dispositif de refroidissement à effet Peltier sur la face inférieure de la carte de circuit imprimé 109, sous le capteur d'images 107. Un tel dispositif de refroidissement permet de limiter significativement l'élévation de température du capteur 107 et ainsi le transfert de calories du capteur 107 vers l'échantillon 103. Toutefois, cette solution présente l'inconvénient d'être relativement complexe et onéreuse. En outre, elle a pour inconvénient de créer un point froid (de température inférieure à la température ambiante), ce qui peut poser d'autres problèmes, notamment lorsque le système d'imagerie est placé dans un incubateur à température contrôlée.

Une autre solution est d'interrompre régulièrement l'alimentation du capteur 107 pour le laisser refroidir, et de ne l'allumer que brièvement uniquement lors des phases d'acquisition d'images. Un inconvénient est que ceci limite le nombre d'images qui peuvent être acquises dans un intervalle de temps donné. En particulier, cette solution est incompatible avec certaines applications de suivi de cellules, dans lesquelles une fréquence d'acquisition relativement élevée est souhaitable pour ne pas confondre les trajectoires de cellules voisines. En outre, du fait du temps d'initialisation relativement long d'un capteur d'images (typiquement quelques secondes), le capteur chauffe et transmet des calories à l'échantillon 103 même lorsqu'une seule image est acquise.

La figure 2 est une vue en coupe illustrant de façon schématique un exemple d'un mode de réalisation d'un dispositif d'imagerie sans lentille.

Comme le dispositif de la figure 1, le dispositif de la figure 2 comprend un support 101 de réception d'un échantillon 103, ce support comportant une face transparente 105, et un capteur d'images 107 disposé en regard de la face transparente 105 du support 101, à faible distance de la face 105, par exemple à une distance comprise entre 100 µm et 1 cm de la face 105. Le capteur 107 est par exemple un capteur matriciel de type CMOS ou CCD. Dans l'exemple représenté, le capteur d'images 107 est monté sur la face supérieure d'une carte de circuit imprimé 109 disposée approximativement horizontalement. La face inférieure de la carte de circuit imprimée 109 repose sur la face supérieure d'un plateau de support inférieur horizontal 201 muni d'une ouverture 202, de façon que, en projection verticale, le capteur 107 soit au-dessus de l'ouverture 202 du plateau 201. Un plateau de support supérieur 111, muni d'une ouverture 112, est placé au-dessus de l'ensemble formé par le plateau de support inférieur 201, la carte de circuit imprimé 109 et le capteur d'images 107, de façon que le capteur 107 soit en regard de l'ouverture 112 du plateau 111. Le support 101 de réception de l'échantillon 103 est disposé sur la face supérieure du plateau 111, de façon que la face transparente 105 du support 101 soit en regard de l'ouverture 112 du plateau 111. Le plateau de support inférieur 201 est fixé au plateau de support supérieur 111 de façon qu'une lame d'air 203, par exemple d'épaisseur comprise entre 100 µm et 1 cm, sépare la face d'exposition à la lumière du capteur 107 (la face supérieure du capteur dans cet exemple) et la face transparente 105 du support 101. Comme dans l'exemple de la figure 1, aucun dispositif optique de grossissement n'est placé entre le capteur 107 et le support 101 de réception de l'échantillon 103.

Dans l'exemple représenté, le support inférieur du capteur d'images 107, formé par le plateau 201 et la carte de circuit imprimé 109, est maintenu à distance de la face inférieure du plateau de support supérieur 111, de façon que la lame d'air 203 ne soit pas isolée de l'air ambiant.

Selon un aspect du mode de réalisation de la figure 2, le dispositif d'imagerie comprend en outre un système de ventilation 205 adapté à forcer la circulation d'un flux d'air sensiblement parallèle à la surface du capteur 107, par exemple un flux laminaire de type rideau d'air, entre la face supérieure du capteur 107 et la face transparente 105 du support 101. Dans l'exemple représenté, le capteur 107 a une forme générale rectangulaire. Le système de ventilation 205 comprend une buse d'injection 207a agencée pour canaliser de l'air provenant de l'extérieur du dispositif et le conduire entre le support inférieur du capteur d'images 107 et le plateau supérieur 111, du côté d'un premier bord 107a du capteur 107. Le système de ventilation 205 comprend en outre une buse d'extraction 207b agencée pour conduire, vers l'extérieur du dispositif, de l'air provenant de l'espace situé entre le support inférieur du capteur d'images 107 et le plateau supérieur 111, du côté d'un deuxième bord 107b du capteur 107 opposé au bord 107a. La sortie de la buse d'injection 207a, située en regard du bord 107a du capteur 107, a par exemple la forme d'une bande rectiligne sensiblement parallèle au bord 107a du capteur, de longueur sensiblement égale à la longueur du bord 107a du capteur, et de largeur sensiblement égale à l'épaisseur de la lame d'air 203. L'entrée de la buse d'extraction 207b, située en regard du bord 107b du capteur 107, a par exemple la forme d'une bande rectiligne sensiblement parallèle au bord 107b du capteur, de longueur sensiblement égale à la longueur du bord 107b du capteur, et de largeur sensiblement égale à l'épaisseur de la lame d'air 203. Dans l'exemple représenté, l'entrée de la buse d'injection 207a a une surface supérieure à celle de sa sortie, et la sortie de la buse d'injection 207b a une surface supérieure à celle de son entrée. Du côté des bords du capteur 107 orthogonaux aux bords 107a et 107b, la lame d'air 203 peut être délimitée par des parois verticales, non représentées, de façon que la lame d'air 203 communique avec l'air extérieur uniquement par l'intermédiaire des buses 207a et 207b. Le système de ventilation 205 comprend en outre un ventilateur 209. Le ventilateur 209 est agencé pour faire circuler un flux d'air entre la face supérieure du capteur 107 et la face transparente 105 du support 101, par l'intermédiaire des buses 207a et 207b. Dans l'exemple représenté, le ventilateur 209 est disposé à la sortie de la buse d'extraction 207b, et est configuré pour aspirer l'air présent dans la buse d'extraction 207b, la lame d'air 203 et la buse d'injection 207a, et le propulser vers l'extérieur du dispositif. A titre de variante, le ventilateur 209 peut être disposé à l'entrée de la buse d'injection 207a, et être configuré pour aspirer de l'air situé à l'extérieur du dispositif et le propulser dans le conduit formé par les buses d'injection 207a, la lame d'air 203 et la buse d'extraction 207b. Un fonctionnement en aspiration de l'intérieur vers l'extérieur, du type représenté en figure 2, est toutefois préférable dans la mesure où il permet d'éviter que les éventuelles calories produites par le moteur du ventilateur 209 ne viennent directement chauffer l'air injecté dans la lame d'air 203. Un ou plusieurs joints d'étanchéité non représentés, par exemple des joints en silicone, peuvent être prévus aux jonctions entre les différentes pièces de l'assemblage, de façon à assurer l'étanchéité du canal fluidique dans lequel est formé la lame d'air.

Ainsi, le système de ventilation 205 permet de renouveler en continu l'air de la lame d'air 203, ce qui permet de limiter significativement voire de supprimer les transferts de chaleur par conduction et par convexion entre le capteur 107 et le support 101 de réception de l'échantillon 105.

A titre d'exemple illustratif, des essais réalisés en incubateur, ont montré que le dispositif de la figure 2 permet de maintenir l'échantillon 103 à une température extrêmement stable, typiquement constante à plus ou moins 0,1°C près, dans des conditions d'acquisitions dans lesquelles le capteur d'images 107 chauffe à plus de 60°C.

Un tel dispositif d'imagerie sans lentille permet ainsi d'envisager des applications dans lesquelles des images sont acquises par le capteur à une cadence relativement élevée, voire en continu.

En outre, un tel dispositif est relativement simple à réaliser et peu onéreux.

A titre de variante, pour limiter encore d'avantage les transferts de chaleur du capteur 107 vers l'échantillon 103, un filtre infrarouge (non représenté) peut être placé entre le capteur 107 et la face transparente 105 du support 101, par exemple entre le capteur 107 et la lame d'air 203, ou entre la lame d'air 203 et la face 105. La prévision d'un tel filtre permet en effet de limiter voire de supprimer les transferts de chaleur par rayonnement entre le capteur 107 et l'échantillon 103. Si un tel filtre infrarouge est prévu, on veillera à ce que la ou les longueurs d'onde d'émission de la source lumineuse du dispositif soient en dehors de la bande de coupure du filtre.

Par ailleurs, pour améliorer encore les performances du dispositif de la figure 2, un deuxième système de ventilation, non représenté, peut être disposé du côté de la face inférieure de la carte de circuit imprimé 109, sous le capteur d'images 107, ce système étant adapté à évacuer par le dessous une partie de la chaleur produite par le capteur 107. A titre d'exemple, le deuxième système de ventilation peut comporter un radiateur métallique, par exemple un radiateur à ailettes, accolé à la face inférieure de la carte de circuit imprimé 109, et un ventilateur adapté à extraire vers l'extérieur du dispositif l'air en contact avec le radiateur.

La figure 3 est une vue en perspective partielle éclatée illustrant plus en détail un exemple de réalisation du dispositif d'imagerie sans lentille de la figure 2. Sur cette figure, sont notamment visibles le plateau supérieur 111 et son ouverture 112, le plateau inférieur 201, la carte de circuit imprimé 109, le capteur d'images 107, les buses d'injection 207a et d'extraction 207b, et le ventilateur 209. Le support 101 de réception de l'échantillon 103 et l'échantillon 103 n'ont en revanche pas été représentés sur la figure 3. Sur la figure 3, a en outre été représenté un système de ventilation secondaire 301 disposé du côté de la face inférieure de la carte de circuit imprime 109, sous le capteur 107.

Des modes de réalisation particuliers ont été décrits. Diverses variantes et modifications apparaîtront à l'homme de l'art. En particulier, les modes de réalisation décrits ne se limitent pas à la structure particulière décrite en relation avec les figures 2 et 3 permettant de maintenir entre le capteur d'images 107 et l'échantillon 103 une lame d'air 203 communiquant avec l'atmosphère ambiante par l'intermédiaire du système de ventilation 205. A titre d'exemple, le plateau de support inférieur 201 peut ne pas comporter d'ouverture en dessous du capteur 107, notamment si le dispositif d'imagerie ne comporte pas un deuxième système de ventilation du côté de la face inférieure du capteur.

De plus, les modes de réalisation décrits ne se limitent pas à l'exemple particulier de système de ventilation décrit en relation avec les figures 2 et 3. A titre d'exemple, le système de ventilation 205 peut comporter des buses d'injection et/ou d'extraction présentant des formes et/ou des agencements différents de ce qui a été décrit ci-dessus et représenté sur les figures 2 et 3. En outre, le nombre de buses du système de ventilation 205 peut être différent de deux. A titre d'exemple, le système de ventilation 205 peut comporter une unique buse couplée au ventilateur 209 à l'entrée ou à la sortie du flux d'air.

Par ailleurs, les modes de réalisation décrits peuvent être utilisés en combinaison avec tout dispositif ou procédé connu permettant de limiter l'élévation de température de l'échantillon 103 sous l'effet de la chaleur produite par le capteur 107.

## Revendications

1. Dispositif d'imagerie sans lentille adapté à l'acquisition d'une image d'un échantillon (103), comprenant :
un support (101) de réception de l'échantillon (103), présentant une face transparente (105) ;
un capteur d'images (107) disposé en regard de ladite face transparente (105) et séparé de ladite face transparente (105) par une lame d'air (203); une source lumineuse disposée du côté de l'échantillon (103) opposé au capteur (107) ; et le dispositif étant **caractérisé par** un système de ventilation (205) adapté à faire circuler un flux d'air entre ladite face transparente (105) et le capteur (107) de façon à renouveler en continu l'air de la lame d'air (203).

2. Dispositif selon la revendication 1, dans lequel le système de ventilation (205) comprend au moins une première buse (207b) d'injection ou d'extraction d'air disposée du côté d'un premier bord (107b) du capteur (107).

3. Dispositif selon la revendication 2, dans lequel le système de ventilation (205) comprend un ventilateur (209) couplé à la première buse (207b) et adapté à souffler ou aspirer de l'air dans la lame d'air (203) par l'intermédiaire de la première buse (207b) .

4. Dispositif selon la revendication 3, dans lequel le ventilateur (209) est configuré pour aspirer de l'air de la lame d'air (203) par l'intermédiaire de la première buse (207b).

5. Dispositif selon l'une quelconque des revendications 2 à 4, dans lequel le système de ventilation (205) comprend en outre une deuxième buse (207a) d'injection ou d'extraction d'air disposée du côté d'un deuxième bord (107a) du capteur (107) opposé au premier bord (107b).

6. Dispositif selon l'une quelconque des revendications 1 à 5, comprenant en outre un filtre infrarouge entre le capteur (107) et ladite face transparente (105).

7. Dispositif selon l'une quelconque des revendications 1 à 6, comprenant en outre un système de ventilation secondaire disposé du côté du capteur (107) opposé à la lame d'air (203).

8. Dispositif selon l'une quelconque des revendications 1 à 7, dans lequel la distance entre le capteur (107) et ladite face transparente (105) est comprise entre 100 µm et 1 cm.

9. Dispositif selon l'une quelconque des revendications 1 à 8, dans lequel le capteur (107) est un capteur matriciel réalisé en technologie CMOS ou CCD.

## Patentansprüche

1. Eine linsenlose Abbildungsvorrichtung, die geeignet ist zum Erfassen eines Bildes einer Probe (103), die Folgendes aufweist:
einen Träger (101) zum Aufnehmen der Probe (103) mit einer transparenten Oberfläche (105);
einen Bildsensor (107), der gegenüber der transparenten Oberfläche (105) angeordnet ist und von der transparenten Oberfläche (105) durch einen Luftspalt (203) getrennt ist;
eine Lichtquelle, die an der Seite der Probe (103) gegenüber dem Sensor (107) angeordnet ist; und
die Vorrichtung ist **gekennzeichnet durch** ein Belüftungssystem (205), das geeignet ist zum Zirkulieren eines Luftstroms zwischen der transparenten Oberfläche (105) und dem Sensor (107), um die Luft des Luftspaltes (203) kontinuierlich zu erneuern.

2. Vorrichtung nach Anspruch 1, wobei das Belüftungssystem (205) wenigstens eine erste Lufteinström- oder -absaugdüse (207b) aufweist, die an der Seite einer ersten Kante (107b) des Sensors (107) angeordnet ist.

3. Vorrichtung nach Anspruch 2, wobei das Belüftungssystem (205) einen Ventilator (209) aufweist, der an die erste Düse (207b) gekoppelt ist und geeignet ist zum Blasen oder Einsaugen in der Luft in oder aus dem Luftspalt (203) über die erste Düse (207b).

4. Vorrichtung nach Anspruch 3, wobei der Ventilator (209) konfiguriert ist zum Einsaugen der Luft von dem Luftspalt (203) über die erste Düse (207b).

5. Vorrichtung nach einem der Ansprüche 2 bis 4, wobei das Belüftungssystem (205) ferner eine zweite Lufteinström- oder absaugdüse (207a) aufweist, die an der Seite einer zweiten Kante (107a) des Sensors (107) gegenüber der ersten Kante (107b) angeordnet ist.

6. Vorrichtung nach einem der Ansprüche 1 bis 5, die ferner einen Infrarotfilter zwischen dem Sensor (107) und der transparenten Oberfläche (105) aufweist.

7. Vorrichtung nach einem der Ansprüche 1 bis 6, die ferner ein sekundäres Belüftungssystem aufweist, das an der Seite des Sensors (107) gegenüber dem Luftspalt (203) angeordnet ist.

8. Vorrichtung nach einem der Ansprüche 1 bis 7, wobei der Abstand zwischen dem Sensor (107) und der transparenten Oberfläche (105) in dem Bereich von 100 µm bis 1 cm liegt.

9. Vorrichtung nach einem der Ansprüche 1 bis 8, wobei der Sensor (107) ein Array-Sensor ist, der mit CMOS oder CCD Technologie hergestellt ist.

## Claims

1. A lensless imaging device capable of acquiring an image of a sample (103), comprising:
a support (101) for receiving the sample (103), having a transparent surface (105);
an image sensor (107) arranged opposite said transparent surface (105) and separated from said transparent surface (105) by an air gap (203);
a light source arranged on the side of the sample (103) opposite to the sensor (107); and
the device being **characterized by** a ventilation system (205) capable of circulating a flow of air between said transparent surface (105) and the sensor (107) to continuously renew the air of the air gap (203).

2. The device of claim 1, wherein the ventilation system (205) comprises at least one first air injection or extraction nozzle (207b) arranged on the side of a first edge (107b) of the sensor (107).

3. The device of claim 2, wherein the ventilation system (205) comprises a ventilator (209) coupled to the first nozzle (207b) and capable of blowing or of sucking in the air into or from the air gap (203) via the first nozzle (207b).

4. The device of claim 3, wherein the ventilator (209) is configured to suck in air from the air gap (203) via the first nozzle (207b).

5. The device of any of claims 2 to 4, wherein the ventilation system (205) further comprises a second air injection or extraction nozzle (207a) arranged on the side of a second edge (107a) of the sensor (107) opposite to the first edge (107b).

6. The device of any of claims 1 to 5, further comprising an infrared filter between the sensor (107) and said transparent surface (105).

7. The device of any of claims 1 to 6, further comprising a secondary ventilation system arranged on the side of the sensor (107) opposite to the air gap (203).

8. The device of any of claims 1 to 7, wherein the distance between the sensor (107) and said transparent surface (105) is in the range from 100 µm to 1 cm.

9. The device of any of claims 1 to 8, wherein the sensor (107) is an array sensor made in CMOS or CCD technology.
